Europäisches Patentamt

European Patent Office

Office européen des brevets

(11) Publication number: **0 052 007**
**A1**

# EUROPEAN PATENT APPLICATION

(21) Application number: **81305320.4**

(22) Date of filing: **10.11.81**

(51) Int. Cl.³: **C 03 B 37/08**, C 03 B 37/02

(30) Priority: **12.11.80 JP 158203/80**

(43) Date of publication of application: **19.05.82**
**Bulletin 82/20**

(84) Designated Contracting States: **DE FR GB IT NL SE**

(71) Applicant: **NITTO BOSEKI CO., LTD., 1 Aza Higashi, Gonome Fukushima-shi (JP)**

(72) Inventor: **Shono, Hiroaki, 20532 Aza Numanoue, Fushiogami Fukushima-shi (JP)**

(74) Representative: **Grundy, Derek George Ritchie et al, CARPMAELS & RANSFORD 43, Bloomsbury Square, London WC1A 2RA (GB)**

(54) **Method of manufacturing glass fibers.**

(57) A method of manufacturing glass fibers using a tip nozzle in which a multiplicity of tips are arranged at such a high density that the distance between outer peripheral surfaces of adjacent tips is as small as 0.3 to 2.0 mm to make the spinning of glass fibers practically impossible by the conventional methods due to joining of adjacent glass cones. In order to form and maintain independent glass cones under the tips to achieve a stable spinning of glass fibers, according to the method, a flow of gas is directed towards the tip nozzle in the direction as close as possible to the direction normal to the tip nozzle such that the gas reaches the tip nozzle to eliminate the gas stagnant in the region between adjacent tips while effectively cooling the tip nozzle and the molten glass cones.

0052007

# METHOD OF MANUFACTURING GLASS FIBERS

## BACKGROUND OF THE INVENTION

### Field of the Invention

The present invention relates to a method of manufacturing glass fibers by making use of a compact tip nozzle having a number of orificed tips arranged at an extremely high density.

### Description of the Prior Art

Hitherto, there have been proposed various methods of manufacturing glass fibers making use of tip nozzles or flat orifice plates. A typical conventional method is to use a flat orifice plate consisting simply of a flat plate made of platinum-rhodium alloy having orifices of diameters of about 1.5 to 3 mm. This conventional method, however, suffers the following problem when the density of the orifices is increased for improving the yield. Namely, when one of glass filaments under spinning from the nozzle is broken, the molten glass flowing from the orifice through which the broken filament has been spun is spread on the lower surface of the nozzle around this orifice to undesirably break the filaments coming out from adjacent orifices. This phenomenon is then easily spread in a manner like a chain reaction to break the filaments from all orifices to create a state so-called "flooding" in which the molten glass is spread over the entire lower surface of the nozzle. Once the "flooding" has taken place, it is extremely difficult to clear molten glass flooding the orifice plate into filaments, i.e. to recover the ordinary fiber forming condition in which the molten glass coming out from the orifices is separated into independent streams to form filaments without joining each other.

In order to obviate this problem, it has been proposed to use a tip nozzle having orificed tips. In this case, molten glass coming out from each tip can wet only the end face of the tip and is forcibly formed into an independent stream without joining molten glass from coming out from the other tip. Thus, the independency of the molten glass cones is positively assisted by the presence of the tips. This tendency is observed even when the orifices are arranged at a high density, owing to the tips which radiate heat therefrom to effectively cool the molten glass in the tip to increase the viscosity of the molten glass cones thereby to facilitate the separation to the filaments. In consequence, orifices can be arranged at a higher density in the tip nozzle than in the flat nozzle plate to remarkably increase the yield. This tip nozzle, however, still suffers the following problem. Namely, when the density of the orifices is increased excessively or when the rate of spinning per orifice is increased impractically, the radiation of heat from the tip becomes insufficient to cool the molten glass to undesirably permit the molten glass to come into the space surrounded by adjacent tips due to a capillary action thereby to join flows of molten glass from adjacent orifices. In order to overcome this problem, countermeasures for forcibly cooling the molten glass have been taken such as insertion of a water-cooled cooling fin or cooling water tube between adjacent rows of tips in such a manner that two rows of tips are disposed between the adjacent fins or tubes. The insertion of the cooling fins or cooling water tubes, however, inconveniently limit the pitch of the tips. In fact, in the practically usable tip nozzle, the pitch of the tips is 3.5 to 5.0 mm in the region where no cooling fin is inserted and 5.5 to 10.0 mm in the region where the cooling fin is inserted. For this reason the number of orifices which can be practically formed in one tip nozzle is usually 400 to 800 and does not exceed 2,000 even in the tip nozzle having the highest density of orifices.

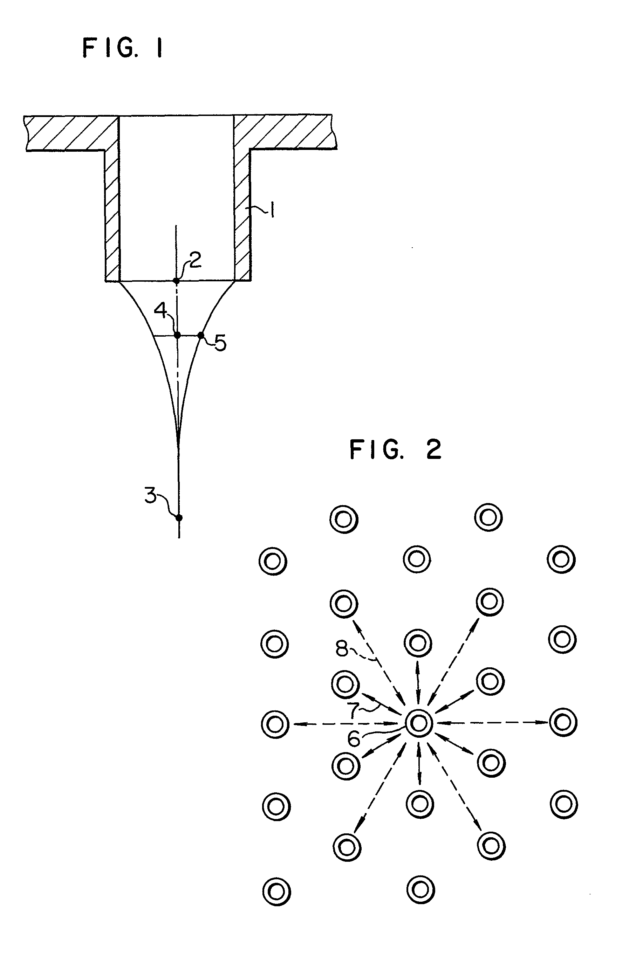

Generally, the molten glass homogenized in the bushing is discharged into ambient air through a tip nozzle 1 having downward tips are shown in Fig. 1, to form a molten glass cone having an inverted conical form with inwardly concaved generating line. More specifically, this glass cone is maintained on condition of a balance between a downward force which is produced by a winder which draws the glass cone at a high speed and an upward force which is the sum of the surface tension acting on the molten glass around the orifice and the internal friction between the molecules of the molten glass.

Essentially, there is a temperature gradient in the glass cone in both of axial direction and radial direction. The axial temperature gradient is such that the temperature is highest at the tip outlet 2 and is gradually decreased toward a point 3 which is downwardly spaced from the tip outlet and where the glass is solidified. To the contrary, the viscosity of the molten glass is low at the tip outlet 2 and high at the point 3. Also, the radial temperature gradient is such that the highest temperature is observed at the center 4 of the cone and the temperature is gradually lowered toward the surface 5 of the cone. This regular and stable temperature gradient within the glass cone is the critical requisite for the spinning of glass fibers.

The temperature distribution in the glass cone is formed by radiation of heat from the surface of the tip and the surface of the glass cone, and by transmission of heat to the air from these surfaces. Therefore, the glass cone achieves the highest emission of heat by radiation and transmission (convection and conduction), i.e. the highest rate of

0052007

cooling of the glass cone, when the tip nozzle has only one orificed tip. In the actual production equipment in which the economy in the operation is the important requisite, the tip nozzle usually has a large number of tips ranging between several hundreds and several thousands.

In the tip nozzle having a multiplicity of tips arranged densely as shown in Fig. 2 each tip which is represented by the tip 6 is surrounded in all directions by the tips of the same size and shape. This means that the glass cone formed under the tip 6 is surrounded by the glass cones of the same shape, size and temperature. In consequence, the adjacent glass cones radiate and absorb an equal amount of heat to and from each other as indicated by full-line arrows 7, so that the efficiency of heat radiation from glass cones as a whole is largely degraded to lower the cooling effect. The arrows of broken lines 8 represent the exchange of less heat between remote tips.

In general, the breakage of glass fibers during the drawing is caused due to the presence of foreign matters in the molten glass, such as air bubbles (or seeds), unmelted matters, refractory particles and the like. The same is true for the cases where the tip nozzles are used. When glass fibers of the same diameter are drawn from the same molten glass, the breakage frequency is higher

- 6 -                      0052007

when the flat orifice plate having closely spaced orifices is used than when the tip nozzle is used. A first reason is that because of the differences in the temperature condition of the molten glass and the orifice length, the diameter of the orifice in the flat orifice plate is usually designed to be smaller than that of the tip orifice when the diameters of the drawn glass fibers are equal in the both cases, so that the size of the molten glass cone formed under the orifice of the flat orifice plate is smaller than that of the molten glass cone formed under the tip of the tip nozzle. This means that the ratio of the surface area to the volume of the molten glass cone in the former case is higher than that in the latter case. Consequently, the probability of the foreign matters in the molten glass cone coming out upon the surface thereof is higher in the former case. Since the filament breakage is attributed to the foreign matters coming out upon the surface of the molten glass cone rather than those within the cone, the filament breakage frequency is higher when the flat orifice plate is used than when the tip nozzle is used. A second reason is that the gas flow blown against the undersurface of the flat orifice plate can attain higher cooling effect than the cooling fins provided on the tip nozzle. That is, in the former case, the surface of the small cone is strongly cooled by the forced convection effect by the gas flow, so that the glass exhibits such as extremely high viscosity as to cause a flaw in the drawn fiber even by the presence of a small air bubble, resulting in an increased tendency of breakage of the drawn fiber.

Summary of the Invention

Accordingly, an object of the invention is to provide a method of manufacturing glass fibers using a tip nozzle having orificed tips arranged at a density higher than those in the conventional tip nozzle.

To this end, according to the invention, there is provided a method of manufacturing glass fibers comprising: passing separate streams of molten glass a tip nozzle having a nozzle plate and a great number of orificed cylindrical tips downwardly projecting from the nozzle plate and disposed at a distance of 0.3 to 2.0 mm between outer peripheral surfaces of adjacent ones of the tips, thereby to form a cone of molten glass at the outlet of each orificed tip; drawing glass fibers from the cones; and directing a flow of gas towards the tip nozzle to move substantially in parallel with glass fibers drawn from the tip nozzle and to reach the tip nozzle in such a condition that gas stagnant in the region between the tip is eliminated to cool the tip nozzle and the cones of molten glass.

The above and other objects, as well as advantages of the invention will become clear from the following description of the preferred embodiments taken in conjunction with the accompanying drawings.

BRIEF DESCRIPTION OF THE DRAWINGS

Fig. 1 is a sectional view illustrating tip nozzle and a cone of molten glass formed under the tip nozzle;

Fig. 2 shows how the tips are arranged in the tip nozzle and how the heat is exchanged among a multiplicity of tips and glass cones; and

Fig. 3 is a schematic illustration of an apparatus suitable for use in carrying out the method of manufacturing glass fibers in accordance with the invention.

DESCRIPTION OF THE PREFERRED EMBODIMENTS

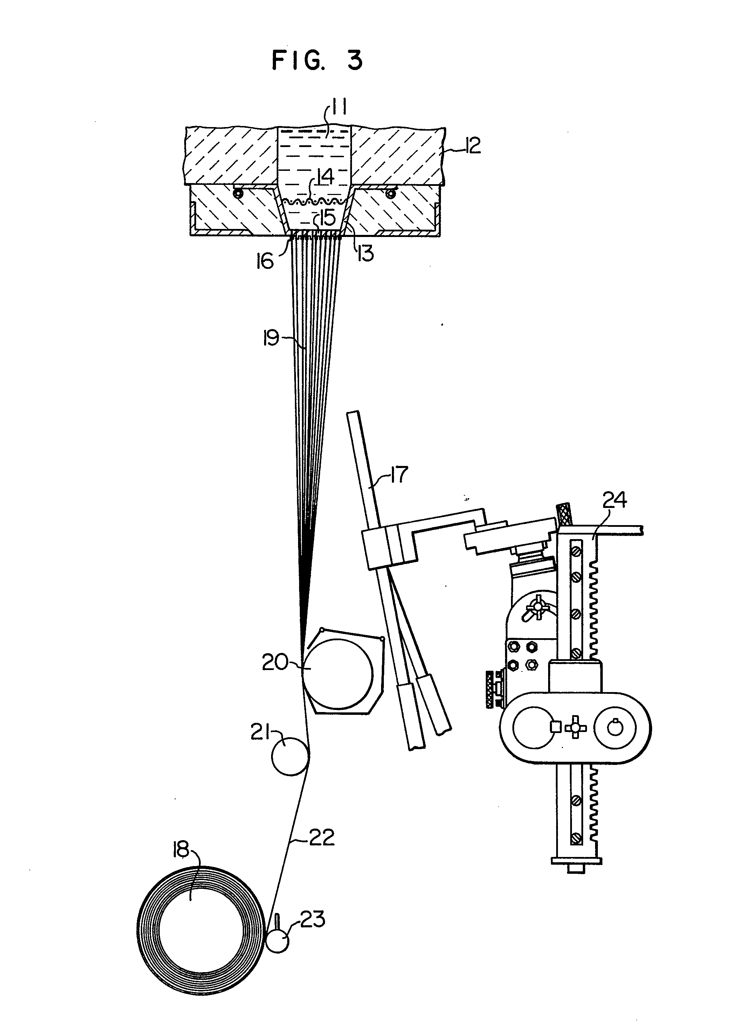

A preferred embodiment of the invention will be described hereinunder with specific reference to Fig. 3 schematically showing an apparatus suitable for use in carrying out the method of the invention for manufacturing glass fibers.

The molten glass 11 of a high temperature prepared beforehand in a fore hearth is supplied into a bushing 13 through an aperture formed in a refractory member 12 and then through a screen 14. An electric current of a low voltage is applied to the bushing 13 to generate heat. The level of the electric current is controlled in accordance with the feedback signal representing the temperature in the bushing 13, thereby to maintain the desired temperature of the molten glass in the bushing 13. The molten glass is discharged to the atmosphere through a multiplicity of orificed tips 16 formed in a tip nozzle 15 attached to the bottom of the bushing 13.

Air nozzles 17 are disposed beneath the tip nozzle 15 to blow air toward the latter. This flow of air effectively cool the molten glass emerging from the lower side of the tip nozzle 15 to form the molten glass into independent molten glass cones suspended from respective orificed tips 16. These molten glass cones are pulled by a winding machine 18 to take a form of independent filaments 19. The glass filaments are then gathered into a strand 22 as they pass through a binder applying roller 20 and a gathering sohe 21, and is wound around the winding machine while being traversed by a traverse machine 23.

The tips 16 are arranged in the tip nozzle 15 at such a high density as to make the spinning practically impossible due to joining of molten glass coming out of the lower side of the tip nozzle 15 through the tips 16, unless air is supplied from the air nozzles. In Fig. 3, a reference numeral 24 designates a stand mounting the air nozzles 17 in such a manner as to permit the adjustment of the angle and position of the air nozzles 17 to optimize the cooling condition.

According to the invention, such a tip nozzle is used as having a high tip density that the distance between outer peripheral surfaces of adjacent tips is as small as 0.3 to 2.0 mm. The minimum distance between the outer surfaces of adjacent tips is determined from the reason concerning the production of the tip nozzle and is limited by the condition of practical use. Namely, if the tips are arranged at such a high density that the distance between the outer peripheral surfaces of adjacent tips is smaller than 0.3 mm, it is extremely difficult to fabricate the tip nozzle and, in addition, the molten glass coming out of the tip nozzle forms beads which join together to seriously deteriorate the productivity. On the other hand, when the distance between outer peripheral surfaces of adjacent tips exceeds 2.0 mm, the loss of heat due to radiation and convection is impractically increased to incur an excessive cooling of the tips and nozzle plate, resulting in an increase of the viscosity of molten glass to such an extent as to make the drawing substantially impossible.

Thus, the above-mentioned distance preferably falls between 0.3 and 1.5 mm and more preferably 0.4 and 1.2 mm. The flowing velocity and flow rate of gas flow applied to the tip nozzle vary depending on various factors such as density of the tips, diameter of tips, temperature of the molten glass in the tip nozzle and so forth. It is, however, necessary that the flowing velocity and the flow rate are so determined that they are high enough to cool the tip nozzle while expelling the gas stagnant around the tips which are heated by the heat radiated from the tip nozzle as well as the molten glass cones suspended from the tip ends, thereby to maintain the optimum drawing temperature to avoid unfavourable joining of adjacent molten glass cones, while making up for the gas which is carried away downwardly with the drawn filaments.

If the gas flow is applied to the tip nozzle, in the direction parallel to the tip nozzle surface, or at an inclination to the latter, the flow of gas will be obstructed by the multiplicity of fibers which are being drawn at a high density, so that the tip nozzle cannot be cooled uniformly over the entire surface thereof. It is, therefore, necessary that the flow of gas is applied substantially in the direction parallel to the direction of running of the filaments being drawn, i.e. in the direction as perpendicular as possible to the tip nozzle surface to effectively expel the gas stagnant in the region around the tips at a high efficiency.

The application of gas flow in the manner as described above allows to form highly uniform cones and filaments with a tip nozzle having

0052007

tips disposed at a small pitch as reduced to the practical limitation, because the gas flow is constantly supplied to the space surrounding each tip and smoothly expelled outwardly without stagnating in the region under the nozzle plate so that in all tips radiation of heat from the outer peripheral surface of the tip or cooling of tip is effected highly uniformly as compared with the conventional cooling method in which cooling fins are disposed at interval of two rows of tips.

The following tables show a result of tests conducted in accordance with the method of the invention using, a tip nozzle having 2000 tips. The distance between outer surfaces of adjacent tips was 0.3 and 2 mm, while the diameter and the length of the tips were 1.6 to 2.8 mm and 0.7 to 4.5 mm, respectively. The molten glass temperature in the bushing was 1200 to 1300$^{\circ}$C. It was confirmed through the tests that, by applying gas flow to the tip nozzle at a rate of 7 to 70 $\ell$/min., it is possible to cool the molten glass immediately after the discharge from the tips down to the optimum spinning temperature of 1000 to 1100$^{\circ}$C.

Examples

Specification of Tip Nozzle

|  | Example 1 | Example 2 | Example 3 |
|---|---|---|---|
| glass composition | E glass | C glass | E glass |
| number of tips | 2000 | 800 | 4000 |
| tip length | 4.0 mm | 2.0 mm | 0.7 mm |
| tip outside dia. | 2.6 mm | 2.4 mm | 1.8 mm |
| tip inside dia. | 1.8 mm | 1.9 mm | 1.35 mm |
| distance between tip outer surfaces | 0.6 mm | 1.6 mm | 0.4 mm |

The tests were carried out with tip nozzles as specified above, in combination with air nozzles specified as follows:

|  | Example 1 | Example 2 | Example 3 |
|---|---|---|---|
| position of air nozzles (downward) | 160 mm | 140 mm | 150 mm |
| inclination angle (to perpendicular line) | $8^\circ$ | $7^\circ$ | $10^\circ$ |
| shape of air nozzles | 5 x 12 mm oval | 9 mm oval | 4 x 13 mm oval |
| pitch of air nozzles | 7 mm | 11 mm | 7 mm |
| number of air nozzles | 50 | 26 | 56 |

The flow rate of air was as follows.

|  | Example 1 | Example 2 | Example 3 |
|---|---|---|---|
| flow rate per air nozzle | 6-10 $\ell$/min. | 20-40 $\ell$/min. | 40-70 $\ell$/min. |
| total air flow rate | 0.35 $m^3$/min. | 0.80 $m^3$/min. | 2.8 $m^3$/min. |

0052007

With the above-specified tip nozzles, air nozzles and air flow rates, glass fibers were produced at rates of 800 g/min., 600 g/min., and 1700 g/min., respectively, without resulting in excessive cooling of the tip nozzle and joining of the drawn filaments, and with imparting moderate cooling effects to the glass cones and tips.

As has been described in detail, according to the invention, the density of the tips of the tip nozzle is increased almost to the utmost density and gas is positively blown against the tip nozzle to effectively cool the tip nozzle and the molte glass cones formed at the tip ends to avoid the adverse affect of heat radiated from the tips and from molten glass cones, thereby to permit the size of the tip nozzle as a whole to be reduced remarkably.

**0052007**

WHAT IS CLAIMED IS

1.      A method of manufacturing glass fibers comprising:  passing separate streams of molten glass through a tip nozzle having a nozzle plate and a great number of orificed cylindrical tips downwardly projecting from the nozzle plate and disposed at a distance of 0.3 to 2.0 mm between outer peripheral surfaces of adjacent ones of said tips, thereby to form a cone of molten glass at the outlet of each said orificed tip; drawing glass fibers from said cones; and directing a flow of gas towards said tip nozzle to move substantially in parallel with glass fibers drawn from said tip nozzle and to reach said tip nozzle in such a condition that gas stagnant in the region between said tips is eliminated to cool said tip nozzle and said cones of molten glass.

2.      A method of manufacturing glass fibers as claimed in claim 1, wherein said distance is 0.2 to 2 mm, the diameter of each said tip is 1.6 to 2.8 mm, the length of each said tip is 0.7 to 4.5 mm, number of said tips is 2000, and the rate of said flow of gas is 7 to 70 ℓ/min.

FIG. 1

FIG. 2

FIG. 3

European Patent
Office

**EUROPEAN SEARCH REPORT**

0052007

Application number

EP 81 30 5320

| Category | Citation of document with indication, where appropriate, of relevant passages | Relevant to claim |
|---|---|---|
| X | GB - A - 2 031 401 (OWENS-CORNING) | |
| | * the whole document * | 1,2 |
| X | JP - A - 51 7218 (NITTO SPINNING) | |
| | * Derwent Abstract; figures 2,3; tabel, page 103 * | 1,2 |
| P/X | EP - A - 0 033 871 (ASAHI FIBER GLASS) | |
| | * the whole document * | 1,2 |
| A | GB - A - 2 021 092 (NITTO BOSEKI) | |
| | * the whole document * | 1,2 |

**DOCUMENTS CONSIDERED TO BE RELEVANT**

**CLASSIFICATION OF THE APPLICATION (Int. Cl. 3)**

C 03 B 37/08
C 03 B 37/02

**TECHNICAL FIELDS SEARCHED (Int.Cl. 3)**

C 03 B 37/02
C 03 B 37/08

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 12.02.1982 | VAN DEN BOSSCHE |

EPO Form 1503.1 06.78